# EUROPÄISCHE PATENTSCHRIFT

(11) **EP 0 537 466 B1**
(45) Veröffentlichungstag und Bekanntmachung des Hinweises auf die Patenterteilung: **10.01.1996**
(21) Anmeldenummer: 92115037.1
(22) Anmeldetag: 03.09.1992
(51) Int. Cl.: A01D 41/12

(54) **Körnerstrommessvorrichtung, insbesondere für Erntemaschinen**
Grain flow measuring device, especially for combine harvesters
Dispositif pour mesurer le débit de grains, notamment pour moissoneuse-batteuse

(30) Priorität: 14.10.1991 DE 4133976
(43) Veröffentlichungstag der Anmeldung: 21.04.1993
(73) Patentinhaber: Claas OHG beschränkt haftende offene Handelsgesellschaft, D-33426 Harsewinkel (DE)
(72) Erfinder: Behnke, Willi, W-4803 Steinhagen (DE); Diekhans, Norbert, Dr., W-4830 Gütersloh (DE)

(56) Entgegenhaltungen:
- EP-A- 0 077 667
- EP-A- 0 339 140
- EP-A- 0 339 142
- DE-A- 2 633 638
- GB-A- 2 102 950
- GB-A- 2 103 796
- US-A- 3 935 866
- US-A- 4 004 289
- MESSEN & PR]FEN Bd. 26, Nr. 9, September 1990, M]NCHEN Seiten 416 - 418 M. HERMANSKI 'OPTIMIERUNG EINES VERLUSTKORNSENSORS'

## Beschreibung

Die Erfindung betrifft eine Körnerstrommeßvorrichtung, insbesondere zur Anordnung in einem Körnerstrom in Erntemaschinen, mit einer Dämpfungseinrichtung und mit einem piezoelektrischen Schwingungsaufnehmer, der etwa mittig auf einer Seite eines Sensorbleches angeordnet und mit diesem verbunden ist, dessen andere Seite sich als eine Prallfläche in einem Körnerstromweg befindet und das abgekantet Randbereiche aufweist, und wobei eine Verstärkervorrichtung, die eingangsseitig mit dem Schwingungsaufnehmer verbunden und räumlich von diesem getrennt ist, an der Meßvorrichtung angeordnet ist.

Eine derartige Körnerstrommeßvorrichtung ist aus der DE 37 31 080 C2 vorbekannt. Dabei ist ein langes schmales Sensorblech etwa mittig mit einem piezoelektrischen Schwingungsaufnehmer auf der Rückseite bestückt, von dem die Anschlußleitungen an eine Verstärkerschaltung geführt sind, die mit einem Gehäuse versehen auf der Sensorplatte aufgeschraubt ist, von wo eine Anschlußleitung zu einer externen Auswerteelektronik in einer mehrfachen längsseitigen Abkantung des Sensorbleches geführt ist. Das Sensorblech ist an den längsseitigen Abkantungen mit Haltebügeln verschraubt, die über Schwingmetalle an den siebartigen Förderflächen ausgangsseitig der Schüttlerhorden befestigt ist, so daß ein Verlustkörnerstrom mit dem über die ganze Breite der Schüttelhorden erstreckten Sensor ermittelt wird, wozu die bei dem Auftreffen der Körner piezoelektrisch detektierten Schwingungssignale der Sensorplatten nacheinander verstärkt, gleichgerichtet, gesiebt, einem Schwellwertvergleicher zugeführt und dann einem Zähler zugeführt werden. Die langgestreckte und ungedämpfte Sensorblech-Ausgestaltung sowie die Halterungs- und Kabelbefestigungen daran haben den Nachteil, daß jeweils abhängig von dem Ort des Körnerauftreffens und von der Art der Reflexionen an den Kanten und Befestigungspunkten sehr unterschiedliche Signale auftreten, die durch die Gleichrichtung und Glättung nicht alle den Schwellwertdiskriminator überwinden und deshalb nicht vollständig erfaßt werden, so daß eine relativ große Meßunsicherheit besteht. Auch tritt ein erheblicher Körnerverlust durch die Anordnung des Sensorbleches hinter dem Schüttlerende auf. Auch wird das Sensorblech in der Einbauposition hinter dem Schüttlerende sehr stark durch die anschließende Strohverarbeitung tangiert, da etliche dort entstehenden Häckselstückchen mit hoher Geschwindigkeit auf die Prallfläche des Sensors geschleudert werden, wodurch Fehlsignale entstehen.

Weiterhin ist aus EP 93 991 B1 die Anordnung eines Sensorbleches mit einem piezoelektrischen Aufnehmer ausgangsseitig eines Schüttlerendes bekannt, wobei über dieses ein Gitterrost hinausragend angeordnet ist, das das auslaufende Stroh von der Prallfläche abhalten soll. Die Körner, die auf die Sensorfläche fallen, gehen jedoch verlustig.

Es ist Aufgabe der Erfindung, eine Körnerstrommeßvorrichtung zu offenbaren, die eine höhere Meßgenauigkeit erbringt und die, in der Erntevorrichtung angeordnet, die Körnerverluste verringert.

Die Lösung besteht darin, daß der gesamte Randbereich des Sensorbleches Abkantungen aufweist, an die, insgesamt eine etwa rahmen- oder kastenförmige Gestalt bildend, jeweils eine Doppelabkantung angeformt ist, und daß hinter dem frontseitigen Sensorblech und zwischen diesem und den Abkantungen ein weicher Schaumstoffkörper als ein Dämpfer eingesetzt ist, in den, getrennt von dem Sensorblech und den Abkantungen gehalten, eine Halteplatte eingelagert ist; und eine vorteilhafte Anordnung der Körnermeßvorrichtung ist weiterhin in dem Nebenanspruch 11 angegeben.

Weitere vorteilhafte Ausgestaltungen sind in den Unteransprüchen angegeben.

Die neuartige Ausgestaltung der Sensorplatte mit den allseitigen Doppelabkantungen zu einer etwa kastenförmigen Gestalt und die Füllung derselben mit einem weichen Schaumstoffkörper erbringt eine hohe Ansprechempfindlichkeit und eine über die gesamte Prallfläche etwa gleichartige Schwingungscharakteristik, die abhängig von der Masse des jeweils auftreffenden Kornes einer gegebenen Art eine bestimmte Anzahl von Schwingungen erbringt, deren Amplitude über einem vorgegebenen Schwellwert liegt.

Ungedämpft, d.h. ohne den dämpfenden Schaumstoffkörper im Inneren, würden durch die vielfältigen Reflexionen an den Sensorblechenden die zahlreichen durch einen Körneraufprall angeregten Schwingungen über 30 - 40 ms anhalten, bis sie auf etwa 10% ihrer Anfangsamplitude abgeklungen sind, wobei die einzelnen Schwingungen eine Dauer von etwa 0,2 bis 0,5 ms haben. Die Dämpfung ist neuerungsgemäß dagegen so vorgenommen, daß diese Schwingungen in ca. 3 ms auf 10% der Anfangsamplitude abklingen, die Zeitkonstante also etwa 1,5 ms beträgt. Das Verhältnis aufeinander folgender Amplituden gleicher Richtung der Schwingung beträgt etwa 0,85 bis 0,7 je nach Ausgestaltung der Sensorblechgeometrie und des Schaumgummi-Dämpfungskörpers. Diese Betrachtung des Schwingungsverhaltens ist nur statistisch gemittelt vorzunehmen, da jeweils mehrere Schwingungsfrequenzen und -formen gleichzeitig erregt werden und eine Überlagerung derselben stattfindet. Je nach Wahl der Höhe einer Bewertungsschwelle übertreffen eine bestimmte Anzahl von Schwingungen, z.B. 3 bis 10, diese Schwelle und zwar abhängig davon, wie groß die Anfangsamplitude war. Somit gibt die Zahl der Schwingungen, die die Schwelle übertreffen, ein Maß für die Körnermasse. Eine Körnerzahl läßt sich daraus durch eine Vergleich mit einer mittleren Körnermasse eines Durchschnittskornes bestimmen. Die Bewertungsschwelle wird zweckmäßig so hoch gewählt, daß die Schwingungen geringerer Amplitude, die Maschinengeräusche und Strohteilchen und Kaff verursachen, darunter liegen. Deshalb liegt der Bewertungsschwellwert zweckmäßig zwischen 50% und 10% der Amplitude, die ein Durchschnittskorn erregt.

Die guten Eigenschaften des Schwingungsverhaltens des Sensorbleches mit dem Dämpfer sind durch das Fehlen von Verschraubungen, von Vernietungen, von Berührungsflächen der Abkantungen, von Stoßfugen und von einer unmittelbaren Befestigung von Haltemitteln am Sensorblech erbracht. Die mehrfachen Abkantungen an allen Seiten und deren Kontakt zu dem Dämpfungskörper verhindert starke unerwünschte Reflexionen von den Blechenden.

Das unbeschichtete, nichtrostende Material des Sensorbleches garantiert eine dauerhaft gleichbleibende Pralleigenschaft der Oberfläche und eine gleichbleibende Schwingungsfrequenz und Dämpfungseigenschaft des Bleches. Die glatte niet- und schraubenfreie Oberfläche des Sensorbleches verhindert eine Verschmutzung und ein Verfangen von Strohteilen daran.

Die Befestigung in dem Dämpfungskörper mittels einer Halteplatte verhindert eine Übertragung der Maschinengeräusche des Schüttlers auf das Sensorblech. Die Vertärker- und Auswerteschaltung ist in dem gehäuseartig ausgebildeten Sensorblech und in dem Schaumstoff geschützt untergebracht. Die elektrische Verbindung von außen zum Verstärker ist durch das Dämpfungsmaterial geführt. Das weiterführende hochflexible Kabel ist an einem Haltewinkel befestigt, der mit der Halteplatte verschraubt ist. Der Haltewinkel ist mit dem Schüttler lösbar verbunden und das hochflexible Kabel ist zu einer Steckverbindung am Chassis der Erntemaschine geführt, so daß die gesamte Sensorvorrichtung leicht austauschbar ist.

Die Verstärkervorrichtung enthält die zur Auswertung der analogen Schwingungsmeßsignale notwendigen Einrichtungen, so daß über das Kabel nur störungsempfindliche vorverarbeitete digitale Signale, insbesondere Zählerstände, zu führen sind und eine Verarbeitung des Zählerstandes jeweils nach Bedarf von einer zentralen Steuervorrichtung erfolgen kann, was bei dieser nur geringe Verarbeitungskapazität beansprucht.

Eine oder mehrere der neuartigen, etwa handtellergroßen Sensorvorrichtungen werden vorteilhaft so vor der Auslaufseite eines Schüttlers unter diesem angeordnet, daß er den bis dort hin gelangenden Nutzkörneranteil meßtechnisch erfaßt. Eine Beeinflussung der Prallfläche durch Häcksel, das in dem anschließenden Bereich oft mit hoher Geschwindigkeit umherfliegt, erfolgt nicht. Strohabweiser sind nicht erforderlich. Der gemessene Teilkörnerstrom gibt in Bezug auf den Erntegutstrom ein Maß für die Schüttlerfunktion. Ein Vorbeifallen der von der Prallplatte reflektierten Körner an dem Sammler wird wirksam durch eine Abweiserplatte verhindert, die sich von dem hinteren Schüttlerende bis nahe an die rückseitige Prallflächenkante erstreckt. Diese Abweiserplatte gibt einen zusätzlichen Schutz gegen eine Verhakung von Stroh an der Meßvorrichtung und gegen ein Eindringen von Häcksel und Kaff in den Körnererfassungsbereich.

Vorteilhaft sind jeweils unter den außenliegenden linken und rechten Schüttlerabschnitten je eine Sensorvorrichtung angeordnet, so daß eine über die Maschinenbreite unterschiedliche Arbeitsweise, insbesondere beim Fahren quer zum Hang, meßtechnisch erfaßt wird und aus dem Unterschied der beiden erfaßten Teilströme abzuleiten ist.

Zur Vereinfachung der Einstellung der Auswertung mehrerer Sensorvorrichtungen auf jeweils eine bestimmte Körnerart ist vorteilhaft für diese gemeinsam eine Signalverteilerschaltung vorgesehen, an der ein Vorgabewert für die Höhe der Verstärkung der Signale und/oder des Schwellwertes für die Signalbewertung gemeinsam für deren Verstärker und Bewertungseinrichtungen einstellbar ist. Die Einstellung läßt sich jeweils entweder über ein kalibriertes Potentiometer oder einen Stufenschalter mit entsprechenden Potentiometerwiderständen vornehmen, oder es kann eine Wertvorgabe seitens der zentralen Steuervorrichtung vorgenommen werden, die jeweils einen entsprechenden Vorgabewert an die Verstärker- und Auswerteschaltung abgibt, das dort gespeichert wird.

Einzelheiten vorteilhafter Ausgestaltungen sind anhand der Figuren 1 bis 6 dargestellt.
- Fig. 1: zeigt einen vertikalen Längsschnitt durch einen Mähdrescher mit einer Körnerstrommeßvorrichtung;
- Fig. 2: zeigt eine Längsseitenansicht einer Körnerstrommeßvorrichtung, teilweise geöffnet;
- Fig. 3: zeigt eine Rückansicht einer Meßvorrichtung;
- Fig. 4: zeigt das Ablaufende einer Schüttlerhorde im Schnitt III-III;
- Fig. 5: zeigt einen Ausschnitt einer Erntevorrichtung mit zwei Körnerstrommeßvorrichtungen von oben;
- Fig. 6: zeigt ein Blockschaltbild mit einer zentralen Auswerteelektronikvorrichtung.

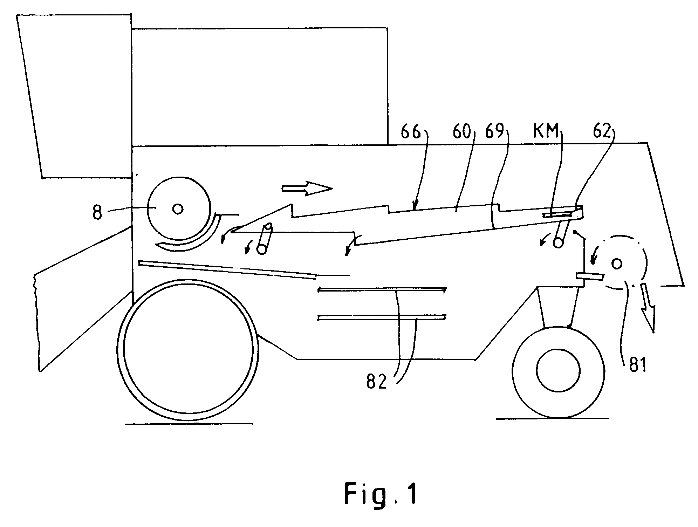

Figur 1 zeigt einen Gesamtquerschnitt durch einen Mähdrescher. Hinter dessen Dreschtrommel (8) ist der Schüttler (66) mit der Körnerstrommeßvorrichtung (KM) und der Abweiserplatte (62) angeordnet. Dahinter ist ausgangsseitig ein Häcksler (81) für das Stroh angeordnet. Die Körner fallen durch die Schlitze in den Schüttlerhorden (60) auf deren Hordenboden (69) und fließen über deren untere Kante auf die darunter befindliche Siebanordnung (82).

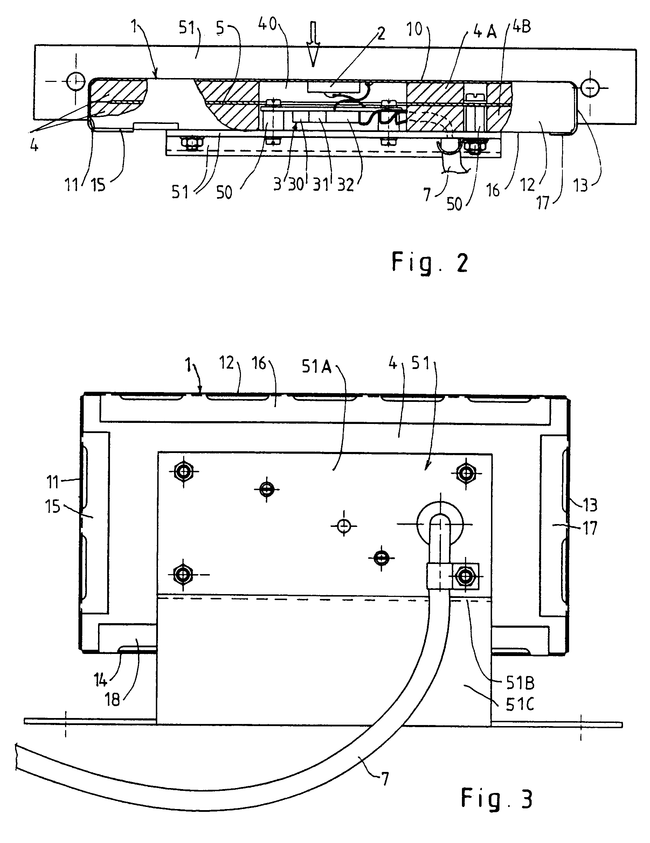

In Figur 2 ist eine Sicht auf die Längsseite einer Sensorvorrichtung gezeigt, die teilweise bis zur Mitte aufgeschnitten ist. Das Sensorblech (1) ist seitlich kastenförmig mit Abkantungen (11, 12, 13) gestaltet, die als Doppelabkantungen (15, 16, 17) kastenförmig weitergebogen sind. Die Prallfläche (10) auf der Frontseite des Sensorbleches (1) ist somit völlig frei von Hindernissen, und sie ist gut reflektierend für aufprallende Körner, da sie aus etwa 0,5 bis 1 mm starkem, nicht rostendem Stahlblech besteht. Innen ist das Sensorblech (1) mit einem weichen Schaumstoffkörper (4) ausgefüllt, so daß auch sämtliche einfachen und doppelten Abkantungen (11 - 17) vollflächig damit in Kontakt stehen. Der Schaumstoffkörper (4) weist etwa mittig eine Aussparung (40) für die Aufnahme eines Piezoquarzes (2) auf, der rückseitig zur Prallfläche (10) auf dem Sensorblech (1) in bekannter Weise befestigt ist. Der Schaumstoffkörper (4) besteht vorzugsweise aus zwei Schaumstoffplatten (4A, 4B) aus weichem Schaumgummi zwischen denen mittig eine Halteplatte (5) elastisch gehalten ist, die randseitig einen mindestens 1 cm breiten Abstand zu den Abkantungen (11 - 13) aufweist. Die Schaumgummiplatten (4A, 4B) sind jeweils etwa 1 - 2 cm dick. Die Halteplatte (5) ist durch Haltebolzen (50) mit einem Haltewinkel (51) verbunden der im mittleren Bereich auf dem Schaumstoffkörper (4) großflächig abgestützt ist, wobei er allseitig mindestens 1 cm Abstand zu den Doppelabkantungen (14 - 16) aufweist.

In der Ausnehmung (40) ist eine Verstärkervorrichtung (3) angeordnet, die einerseits über hochflexible Verbindungsleitungen mit dem Piezokristallaufnehmer (2) verbunden ist und andererseits mit den Leitungen eines Anschlußkabels (7) verbunden ist, das abschnittweise durch den Schaumstoffkörper (4) geführt und an dem Haltewinkel (51) angeschellt ist.

Figur 3 zeigt eine Aufsicht auf die Sensorvorrichtung von der Haltewinkel-Befestigungsseite her. Das Sensorblech (1) weist die vier Abkantungen (11 - 14) an den vier Seiten auf, an die sich die 1 bis 2 cm breiten Doppelabkantungen (15 - 18) jeweils anschließen. Die einfachen und doppelten Abkantungen (11 - 18) sind an den Ecken freigeschnitten, so daß keine klirrenden Schwingungsübertragungen dort auftreten können.

Der Haltewinkel (51) weist zur Begrenzung des an dem Schaumstoffkörper (4) anliegenden Stützbereiches (51A) eine abgewinkelte Stufe (51B) auf, so daß der freie Winkelabschnitt (51C) mit der benachbarten Doppelabkantung (18) keine Berührung hat.

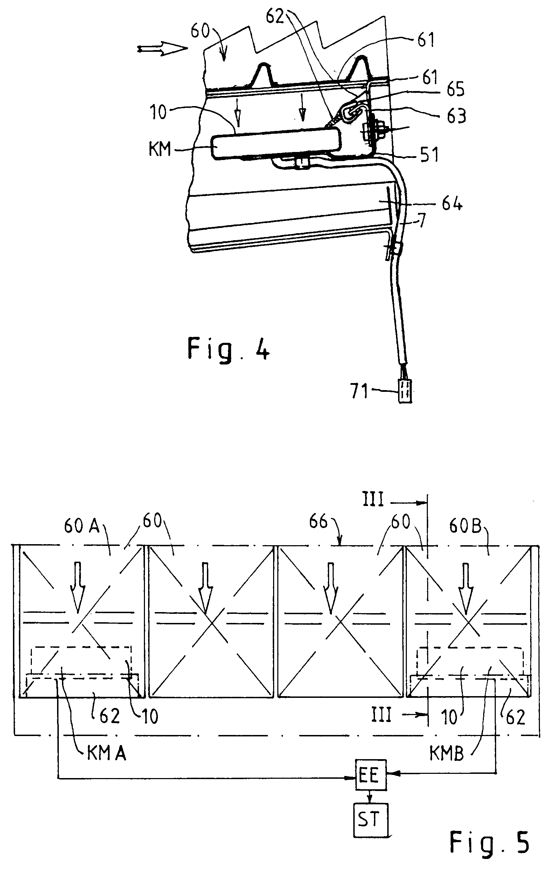

Figur 4 zeigt eine Seitenansicht einer Schüttlerhorde (60) in einer Erntemaschine, bei der beabstandet unter dem strohaustrittseitigen Hordenende (61) der siebartigen Förderfläche der Schüttlerhorde (60) eine Körnerstrommeßvorrichtung (KM) angeordnet ist. Deren Prallfläche (10) ist in Fahrtrichtung des Mähdreschers gesehen leicht geneigt angeordnet, so daß auftreffende Körner weitgehend in die darunter befindliche Auffangmulde (64) fallen. Weiterhin ist die Meßvorrichtung (KM) mit dem Haltewinkel (51) an der Förderfläche (61) über einen Halter (63) lösbar verbunden. An dem Halter (63) ist weiterhin eine Steckvorrichtung (65) für eine Abweiserplatte (62) gehalten, die sich unter einem Winkel von ca. 45° von dem Schüttelsiebende (61) zu der benachbarten Prallplattenkante ertreckt und nahe neben oder über dieser endet. Das Anschlußkabel (7) ist chassisseitig mit einer Zugentlastung befestigt und mit einem Stecker (71) lösbar zu einer zentralen Steuerlektronik verbunden.

Figur 5 zeigt eine Aufsicht auf einen Ausschnitt aus einer Erntemaschine auf die Rgesamte Rüttlervorrichtung (66). Diese besteht gewöhnlich aus mehreren parallelen Schüttlerhorden (60), die über ein Kurbelgetriebe bewegt werden.In den beiden außenseitigen Schüttlerhorden (60A,60B) ist je eine Körnermeßvorrichtung (KMA, KMB) angeordnet, deren Kabel (7) zu einer gemeinsamen Einstellelektronikvorrichtung (EE) führt, von der aus eine Kabelverbindung zu einer zentralen Steuer- und Auswerteelektronik (ST) besteht, die beispielsweise eine genormte CAN-Datenübertragungsverbindung ist. Zwischen den Körnerstrommeßsensoren (KMA, KMB) und den Hordenenden (61) sind die Abweiserplatten angeordnet.

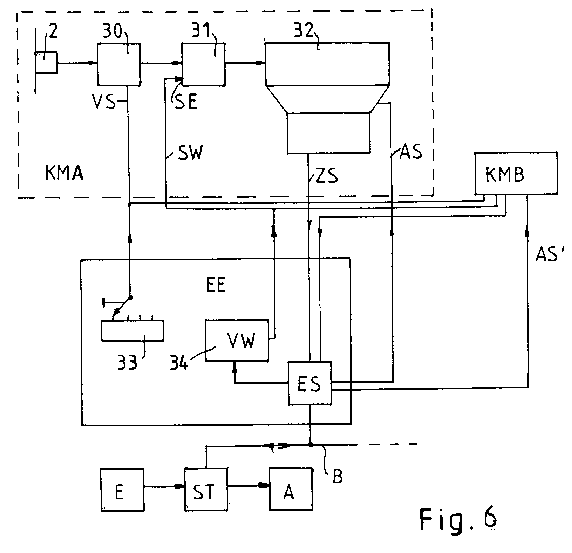

Figur 6 zeigt ein Blockschaltbild der Verstärkervorrichtung einer Körnerstrommeßvorrichtung (KMA) und der damit verbundenen gemeinsamen Zwischenschaltung (EE) sowie der zentralen Steuerelektronik (ST).

Der Piezokristallsignalaufnehmer (2) ist eingangsseitig an einen in seiner Verstärkung steuerbaren Verstärker (30) angeschlossen, dessen Ausgangssignal einem Schwellwertvergleicher (31) zugeführt ist, dem an seinem Schwellwerteingang (SE) ein vorgebbarer Schwellwert (SW) zugeführt ist und dessen impulsförmiges Ausgangssignal auf den Zähleingang eines digitalen Zählers (32) geführt ist.

In der Zwischenschaltung (EE) befinden sich Einstellschaltungen (33, 34) für ein Verstärkungssteuersignal (VS) und einen Schwellwert (SW) die sowohl dem im einzelnen gezeigten Verstärker (30) bzw. dem Schwellwertvergleicher (31) zugeführt sind als auch weiteren Verstärkern und Schwellwertschaltungen weiterer Körnermeßvorrichtung (KMB) parallel zugeführt sind. Die Einstellschaltungen (33, 34) können handbetätigbare Stufenpotentiometer (33) oder elektronische, durch die Steuervorrichtung (ST) mit einem Vorgabewert (VW) ladbare Signalhalteschaltungen (34) sein, wovon jeweils eine beispielhaft gezeigt ist.

Die Steuervorrichtung (ST) ist über einen Datenübertragungsbus (B) mit der zwischenschaltung (EE) verbunden, die in einer Entschlüsslerschaltung (ES) die Kommandos der Steuervorrichtung (ST) entschlüsselt und demgemäß entweder einen Vorgabewert (VW) in eine Signalhalteschaltung (34) aufnimmt oder ein Abfragesignal (AS, AS') abgibt, das aus einer Impulsfolge bestehen kann, und den Zählerstand (ZS) des Zählers (32) abfragt und so an die zentrale Steuervorrichtung (ST) zur weiteren Verwertung und Akkumulation überträgt. Die Steuervorrichtung (ST) weist eine Eingabevorrichtung (E), z.B. eine Kommandotastatur, auf, mit der jeweils ein getreideartspezifischer Vorgabewert (VW) direkt oder durch eine Tabellenzuordnung vorgebbar ist. Weiterhin ist zur Ausgabe der Zählerstände oder daraus programmäßig ermittelter Körnermengen oder Mengendifferenzen eine Anzeigevorrichtung (A) an die Steuervorrichtung (ST) angeschlossen. Sind mehrere Körnerstrommeßvorrichtung (KMA, KMB) an die Zwischenschaltung (EE) angeschlossen, so werden die Zählerstände (ZS) nacheinander abgefragt, wozu verschiedene Abfragesignale (AS, AS') von der Entschlüsslerschaltung (ES) abgegeben werden.

## Patentansprüche

1. Körnerstrommeßvorrichtung, insbesondere zur Anordnung in einem Körnerstrom in Erntemaschinen, mit einer Dämpfungseinrichtung und mit einem piezoelektrischen Schwingungsaufnehmer (2), der etwa mittig auf einer Seite eines Sensorbleches (1) angeordnet und mit diesem verbunden ist, dessen andere Seite sich als eine Prallfläche (10) in einem Körnerstromweg befindet und das abgekantete Randbereiche aufweist, und wobei eine Verstärkervorrichtung (3), die eingangsseitig mit dem Schwingungsaufnehmer (2) verbunden ist und räumlich von diesem getrennt ist, an der Meßvorrichtung angeordnet ist, dadurch gekennzeichnet, daß der gesamte Randbereich des Sensorbleches (1) Abkantungen (11 - 14) aufweist, an die, insgesamt eine etwa rahmen- oder kastenförmige Gestalt bildend, jeweils eine Doppelabkantung (15 - 18) angeformt ist, und daß hinter dem frontseitigen Sensorblech (1) und zwischen diesem und den Abkantungen (11 - 18) ein weicher Schaumstoffkörper (4) als ein Dämpfer eingesetzt ist, in den, getrennt von dem Sensorblech (1) und den Abkantungen (11 - 18) gehalten, eine Halteplatte (5) eingelagert ist.

2. Körnerstrommeßvorrichtung nach Anspruch 1, dadurch gekennzeichnet, daß die einfachen und doppelten Abkantungen (11 - 18) zueinander berührungslos freigeschnitten sind.

3. Körnerstrommeßvorrichtung nach Anspruch 1 oder 2, dadurch gekennzeichnet, daß die Halteplatte (5) die Verstärkervorrichtung (3) trägt und mit Haltebolzen (50) an einem Haltewinkel (51) befestigt ist.

4. Körnerstrommeßvorrichtung nach Anspruch 3, dadurch gekennzeichnet, daß der Haltewinkel (51) im Bereich zwischen den Doppelabkantungen (15 - 18) beabstandet zu diesem an dem Schaumstoffkörper (4) elastisch abgestützt ist.

5. Körnerstrommeßvorrichtung nach einem der vorstehenden Ansprüche, dadurch gekennzeichnet, daß die Prallfläche (10) etwa rechteckig gestaltet ist und deren Seitenabmessungen zwischen 50 mm und 250 mm betragen und die Abkantungen (11 - 14) eine Höhe von 15 bis 30 mm aufweisen.

6. Körnerstrommeßvorrichtung nach Anspruch 5, dadurch gekennzeichnet, daß das Sensorblech (1) aus nicht rostendem Stahl von 0,5 mm - 1 mm Stärke besteht.

7. Körnerstrommeßvorrichtung nach Anspruch 5 oder 6, dadurch gekennzeichnet, daß der Schaumstoffkörper (4) aus einem Schaumstoff aus natürlichem oder künstlichem Gummi besteht und dessen Dämpfung so groß gewählt ist, daß eine auf der Prallfläche (10) erregte Schwingung in 2 - 5 ms auf ca 10% ihrer Ausgangsamplitude abklingt.

8. Körnerstrommeßvorrichtung nach Anspruch 1, dadurch gekennzeichnet, daß die Verstärkervorrichtung (3) einen in seinem Verstärkungsgrad steuerbaren Verstärker (30) besteht, dessen Augangssignal einem Schwellwertvergleicher (31) zugeführt ist, dessen impulsförmiges Ausgangsignal einen digitalen Zähler (32) am Zähleingang zugeführt ist, dessen jeweiliger Zählerstand (ZS) durch ein Zählerabfragesignal (AS) gesteuert auslesbar ist.

9. Körnerstrommeßvorrichtung nach Anspruch 8, dadurch gekennzeichnet, daß der Verstärker (30) steuerungsseitig mit einem Stufenpotentiometer (33) verbunden ist.

10. Körnerstrommeßvorrichtung nach Anspruch 8, dadurch gekennzeichnet, daß der Verstärker (30) steuerungsseitig oder der Schwellwertvergleicher (31) an einem Schwellwerteingang (SE) mit einer Steuersignalhalteschaltung (34) verbunden ist, die mit einem Vorgabewert (VW) ladbar ist.

11. Erntevorrichtung mit mindestens einer Körnerstrommeßvorrichtung (KM, KMA, KMB) nach einem der vorstehenden Ansprüche 1 bis 10, dadurch gekennzeichnet, daß diese nahe einer siebartigen Förderfläche (61) beabstandet unterhalb derselben mit dieser verbunden angeordnet ist.

12. Erntevorrichtung nach Anspruch 11, dadurch gekennzeichnet, daß zwischen der Förderfläche (61) und der zu diesem gerichteten Ende der Prallfläche (10) gering beabstandet dazu eine Abweiserplatte (62) angeordnet ist.

13. Erntevorrichtung nach Anspruch 11 oder 12, dadurch gekennzeichnet, daß die Abweiserplatte (62) steckbar an der Förderfläche (61) gehalten ist.

14. Erntevorrichtung nach einem der Ansprüche 11 - 13, dadurch gekennzeichnet, daß jeweils an einer rechts außen liegenden und einer links außenliegenden Schüttlhorde (60A, 60B) eine Körnerstrommeßvorrichtung (KMA, KMB) angeordnet ist.

15. Erntevorrichtung nach Anspruch 14, dadurch gekennzeichnet, daß den beiden Körnerstrommeßvorrichtungen (KMA, KMB) ein Verstärkungssteuersignal (VS) und/oder ein Schwellwert (SW) von einem gemeinsamen Stufenpotentiometer (33) zugeführt ist.

16. Erntevorrichtung nach Anspruch 14, dadurch gekennzeichnet, daß die Körnermeßvorrichtungen (KMA, KMB) mit einer gemeinsamen zentralen Steuer- und Auswerteelektronikvorrichtung (ST) verbunden sind, die diesen programmgesteuert jeweils ein Zählerabfragesignal (AS, AS') zuführt und den dadurch jeweils ausgegebenen Zählerstand (ZS) übernimmt.

17. Erntevorrichtung nach Anspruch 16, dadurch gekennzeichnet, daß die zentrale Steuer- und Auswerteelektronikvorrichtung (ST) jeweils abhängig von einer Vorgabe über eine Eingabevorrichtung (E) programmgesteuert der Steuersignalhalteschaltung (34) einen Vorgabewert (VW) zuführt.

## Claims

1. Grain-flow measuring device, especially for arrangement in a grain flow in harvesting machines, with a damping means and with a piezoelectric vibration recorder (2) which is arranged approximately centrally on one side of a sensor plate (1) and is connected to the latter, the other side of which is located as a baffle surface (10) in a grain-flow path, and which sensor plate has bent edge regions, there being arranged on the measuring device an amplifier device (3) which is connected on the input side to the vibration recorder (2) and which is separated spatially from this, characterized in that the entire edge region of the sensor plate (1) has bends (11 - 14), onto which a double bend (15 - 18) is formed in each case, so as to form altogether an approximately frame-like or box-like shape, and in that there is inserted as a damper behind the front sensor plate (1) and between this and the bends (11 - 18) a soft foam body (4), in which a holding plate (5) is embedded so as to be kept separate from the sensor plate (1) and the bends (11 - 18).

2. Grain- flow measuring device according to Claim 1, characterized in that the single and double bends (11 - 18) are cut free without contact with one another.

3. Grain-flow measuring device according to Claim 1 or 2, characterized in that the holding plate (5) carries the amplifier device (3) and is fastened to a holding angle (51) by means of holding bolts (50).

4. Grain-flow measuring device according to Claim 3, characterized in that the holding angle (51) is supported elastically on the foam body (4) in the region between the double bends (15 - 18) and at a distance from these.

5. Grain-flow measuring device according to one of the preceding claims, characterized in that the baffle surface (10) is made approximately rectangular and its lateral dimensions amount to between 50 mm and 250 mm, and the bends (11 - 14) have a height of 15 to 30 mm.

6. Grain-flow measuring device according to Claim 5, characterized in that the sensor plate (1) consists of stainless steel of a thickness of 0.5 mm - 1 mm.

7. Grain-flow measuring device according to Claim 5 or 6, characterized in that the foam body (4) consists of a foam composed of natural or synthetic rubber and its damping is selected so high that a vibration excited on the baffle surface (10) dies to approximately 10 % of its initial amplitude in 2 - 5 ms.

8. Grain-flow measuring device according to Claim 1, characterized in that the amplifier device (3) consists of an amplifier (30) of controllable amplification factor, the output signal of which is fed to a threshold comparator (31), the pulse-like output signal of which is fed to the counting input of a digital counter (32), the respective count (ZS) of which can be read out in a controlled manner by means of a counter interrogation signal (AS).

9. Grain-flow measuring device according to Claim 8, characterized in that the amplifier (30) is connected on the control side to a step potentiometer (33).

10. Grain-flow measuring device according to Claim 8, characterized in that the amplifier (30) is connected on the control side or the threshold comparator (31) is connected at a threshold input (SE) to a control-signal holding circuit (34) which can be loaded with a preset value (VW).

11. Harvesting appliance having at least one grain-flow measuring device (KM, KMA, KMB) according to one of the preceding Claims 1 to 10, characterized in that the latter is arranged near a screen-like conveying surface (61) at a distance below the latter and so as to be connected to this.

12. Harvesting appliance according to Claim 11, characterized in that a deflector plate (62) is arranged between the conveying surface (61) and that end of the baffle surface (10) facing the conveying surface (61) and at a short distance from this.

13. Harvesting appliance according to Claim 11 or 12, characterized in that the deflector plate (62) is held insertably on the conveying surface (61).

14. Harvesting appliance according to one of Claims 11 to 13, characterized in that a grain-flow measuring device (KMA, KMB) is arranged in each case on a right outer and a left outer shaker hurdle (60A, 60B).

15. Harvesting appliance according to Claim 14, characterized in that an amplification control signal (VS) and/or a threshold value (SW) is fed from a common step potentiometer (33) to the two grain-flow measuring devices (KMA, KMB).

16. Harvesting appliance according to Claim 14, characterized in that the grain-measuring devices (KMA, KMB) are connected to a common central electronic control and evaluation device (ST) which in each case feeds a counter interrogation signal (AS, AS') to these under program control and which receives the count (ZS) thereby emitted in each case.

17. Harvesting appliance according to Claim 16, characterized in that the central electronic control and evaluation device (ST) feeds a preset value (VW) under program control to the control-signal holding circuit (34) via an input device (E), in each case as a function of a presetting.

## Revendications

1. Dispositif de mesure du débit de grains, en particulier pour l'installation dans un flux de grains dans des moissonneuses-batteuses, comprenant un dispositif d'amortissement et un enregistreur de vibrations piézoélectrique (2), qui est disposé environ au milieu d'un côté d'une plaque de détection (1) et est relié à celle-ci, l'autre côté se trouvant dans un flux de grains en tant que surface d'impact (10) et présentant la zone marginale pliée, et un dispositif amplificateur (3), qui est relié du côté de l'entrée à l'enregistreur de vibrations (2) et est séparé de celui-ci dans l'espace, est monté sur le dispositif de mesure, caractérisé en ce que toute la zone marginale de la plaque de détection (1) présente des bords pliés (11 à 14), qui sont chacun pliés une deuxième fois (15 à 18), pour former une configuration en substance en forme de cadre ou de caisson, et en ce que derrière la plaque de détection antérieure (1) et entre celle-ci et les bords pliés (11 à 18) est inséré un corps en mousse mou (4) servant d'amortisseur, dans lequel, maintenue séparée de la plaque de détection (1) et des bords pliés (11 à 18), est montée une plaque de retenue (5).

2. Dispositif de mesure du débit de grains suivant la revendication 1, caractérisé en ce que les bords pliés une première fois et une deuxième fois (11 à 18) sont coupés de manière à ne pas être en contact l'un avec l'autre.

3. Dispositif de mesure du débit de grains suivant la revendication 1 ou 2, caractérisé en ce que la plaque de retenue (5) porte le dispositif amplificateur (3) et est fixée par des boulons de retenue (50) à une cornière de retenue (51).

4. Dispositif de mesure du débit de grains suivant la revendication 3, caractérisé en ce que la cornière de retenue (51) prend appui de manière élastique sur le corps de mousse (4) dans la zone située entre les bords pliés une deuxième fois (15 à 18) à distance de ceux-ci.

5. Dispositif de mesure du débit de grains suivant l'une quelconque des revendications précédentes, caractérisé en ce que la surface d'impact (10) est d'une configuration presque rectangulaire et ses dimensions latérales sont comprises entre 50 mm et 250 mm et les bords pliés (11 à 14) ont une hauteur de 15 à 30 mm.

6. Dispositif de mesure du débit de grains suivant la revendication 5, caractérisé en ce que la plaque de détection (1) est faite d'acier inoxydable de 0,5 mm à 1 mm d'épaisseur.

7. Dispositif de mesure du débit de grains suivant la revendication 5 ou 6, caractérisé en ce que le corps de mousse (4) est fait d'une mousse de caoutchouc naturel ou synthétique et son pouvoir d'amortissement est choisi tel qu'une vibration suscitée sur la surface d'impact (10) décroisse en 2 à 5 ms jusqu'à environ 10% de son amplitude de départ.

8. Dispositif de mesure du débit de grains suivant la revendication 1, caractérisé en ce que le dispositif amplificateur (3) comprend un amplificateur (30) dont le gain peut être commandé, dont le signal de sortie est fourni à un détecteur à seuil (31), dont le signal de sortie impulsionnel est fourni à un compteur numérique (32) à l'entrée de comptage, dont la position de comptage (ZS) peut être affichée sous la commande d'un signal d'interrogation de compteur (AS).

9. Dispositif de mesure du débit de grains suivant la revendication 8, caractérisé en ce que l'amplificateur (30) est relié du côté de la commande à un potentiomètre à gradins (33).

10. Dispositif de mesure du débit de grains suivant la revendication 8, caractérisé en ce que l'amplificateur (30) du côté de la commande ou le comparateur à seuil (31) au niveau d'une entrée de valeur de seuil (SE) est relié à un circuit de maintien de signal de commande (34), qui peut être chargé d'une valeur préréglée (VW).

11. Appareil de récolte comprenant au moins un dispositif de mesure du débit de grains (KM, KMA, KMB) suivant l'une quelconque des revendications 1 à 10, caractérisé en ce que ce dispositif de mesure est disposé à proximité d'une surface de transport du type crible (61), espacé en dessous de cette même surface et relié à celle-ci.

12. Appareil de récolte suivant la revendication 11, caractérisé en ce qu'une plaque déflectrice (62) est disposée entre la surface de transport (61) et l'extrémité de la surface d'impact (10) dirigée vers cette surface de transport, à courte distance de celle-ci.

13. Appareil de récolte suivant la revendication 11 ou 12, caractérisé en ce que la plaque déflectrice (62) est tenue attachée à la surface de transport (61).

14. Appareil de récolte suivant l'une quelconque des revendications 11 à 13, caractérisé en ce qu'un dispositif de mesure du débit de grains (KMA, KMB) est disposé à chaque fois au niveau d'une grille à secousses extérieure droite et d'une grille à secousses extérieure gauche (60A, 60B).

15. Appareil de récolte suivant la revendication 14, caractérisé en ce qu'un signal de commande de gain (VS) et/ou une valeur de seuil (SW) d'un potentiomètre à gradins commun (33) est fourni aux deux dispositifs de mesure du débit de grains (KMA, KMB).

16. Appareil de récolte suivant la revendication 14, caractérisé en ce que les dispositifs de mesure du débit de grains (KMA, KMB) sont reliés à un dispositif électronique d'évaluation et de commande central commun (ST), qui leur applique, sous la commande d'un programme, à chacun un signal d'interrogation de compteur (AS, AS') et reçoit l'état de comptage de la sorte chaque fois fourni (ZS).

17. Appareil de récolte suivant la revendication 16, caractérisé en ce que le dispositif électronique d'évaluation et de commande central (ST) applique à chaque fois en fonction d'une valeur prédéfinie via un dispositif d'entrée (E), sous la commande d'un programme, une valeur prédéfinie (VW) à un circuit de maintien de signal de commande (34).
